# EUROPEAN PATENT APPLICATION

(11) **EP 4 685 035 A1**
(43) Date of publication of application: **28.01.2026**
(21) Application number: 25190255.7
(22) Date of filing: 17.07.2025
(51) Int. Cl.: B62D 35/00, B62D 37/02

(54) **ROAD VEHICLE WITH MOBILE REAR WING**

(30) Priority: 26.07.2024 IT 202400017440
(71) Applicant: FERRARI S.p.A., 41100 Modena (IT)
(72) Inventor: CURATOLA, Rubens Mauro, 41100 MODENA (IT)
(74) Representative: Studio Torta S.p.A.

(57) **Abstract**

Road vehicle having a roll axis, a pitch axis and a yaw axis, wherein the road vehicle comprises: a tailgate with a rear edge; a rear wing coupled to the tailgate and extending substantially bridge-like along the pitch axis with two lateral portions attached to the tailgate and a central portion; wherein the central portion of the rear wing is movable between: a first configuration wherein the central portion makes with the rest of the rear wing a single seamless aerodynamic surface and wherein the rear edge of the tailgate defines the rear end of the vehicle's rear overhang; and at least a second configuration wherein the movable portion is in a rearward position along the roll axis relative to the rest of the rear wing and comprises a rear edge that projects posteriorly beyond the rear edge of the tailgate such that in the second configuration the rear end of the vehicle's rear overhang is defined by the rear edge of the central portion of the movable wing.

## Description

### Cross-reference to Related Applications

This patent application claims priority from Italian patent application no. 102024000017440, filed on July 26, 2024, the entire disclosure of which is incorporated herein by reference.

### Technical Sector of the Invention

The present invention relates to a road vehicle. In particular, the present invention relates to a road vehicle with a tailgate or hatchback and a rear wing attached to the tailgate that extends substantially bridge-like along the pitch axis of the vehicle. As known, this rear wing performs an aerodynamic function. In particular, the present invention will address the problem of how to improve said rear wing in order to optimise aerodynamic performance in certain conditions without undermining the stylistic aspect of the vehicle in other conditions.

### Prior Art

As known, a road vehicle is a vehicle of which the geometrics and dynamics are defined by three particular axes, known as the roll axis, the pitch axis and the yaw axis. Furthermore, as known, a road vehicle is provided with an external bodywork that comprises, along the roll axis from the front towards the rear, the bonnet (usually protecting the engine), the roof (usually protecting the passenger compartment) and the tailgate or hatchback. The tailgate comprises a rear edge that defines the rear end of the vehicle's rear overhang. The road vehicle of the present invention comprises a bridge-shaped rear wing that extends parallel to the pitch axis along the tailgate. As known, such rear wing performs an aerodynamic function. Two types of rear wing currently exist, in which a first type does not project posteriorly beyond the rear edge of the tailgate and a second type in which it projects posteriorly beyond the rear edge of the tailgate. In such second case, the vehicle's rear overhang is no longer defined by the rear edge of the tailgate, but rather by the rear edge of the wing. This second configuration maximises the aerodynamic function of the wing in certain conditions, but in other conditions, however, there is not a technical advantage such as to justify the increased overall dimensions of the vehicle along the roll axis.

### Object and Summary of the Invention

Starting from this prior art, the present invention proposes an innovative rear wing capable of reconciling the technical aerodynamic needs with the aesthetic of a limited rear overhang.

Therefore, according to the present invention, a vehicle as claimed in the appended claims is obtained. As claimed, the starting point of the present invention is a road vehicle having a roll axis X, a pitch axis Y and a yaw axis Z, wherein the road vehicle is provided with a tailgate or hatchback with a rear edge and a rear wing attached to the tailgate. As known, the rear wing has aerodynamic functions and extends substantially bridge-like parallel to the pitch axis along the tailgate. The rear wing comprises two lateral portions attached to the tailgate (preferably to the lateral edges of the tailgate) and a central portion raised with respect to the tailgate. Starting from such known configuration, according to the main aspect of the present invention, the rear wing is not a static element, but can be switched into at least two different configurations. In particular, the central portion of the rear wing is selectively movable between:
- a first configuration (which substantially corresponds with the prior art with static wing) in which the central portion makes with the rest of the rear wing a single seamless aerodynamic surface and in which the rear edge of the tailgate defines the rear end of the vehicle's rear overhang;
- at least a second configuration in which the movable portion is in a rearward position along the roll axis relative to the rest of the rear wing and comprises a rear edge that projects posteriorly beyond the rear edge of the tailgate such that, in the second configuration, the rear end of the vehicle's rear overhang is defined by the rear edge of the central portion of the movable wing.

Preferably, in order to move from the first to the second configuration, and vice versa, the central portion of the rear wing makes a translation or roto-translation movement.

Preferably, the central portion is configured to realize a plurality of second configurations wherein in each second configuration it realizes a different rear overhang of the vehicle.

Preferably, the central portion comprises a front edge. In a second configuration of maximum rear overhang, the front edge of the central portion of the wing is substantially aligned to the rear edge of the tailgate so that the entire central portion projects posteriorly beyond the rear edge of the tailgate.

Preferably, in the second configuration (and/or also in the first configuration), the central portion is rotatable around an axis parallel to the pitch axis.

Preferably, in the configuration of maximum overhang, the rotation axis of the central portion (rearward) of the wing is at the front edge of the central portion flush with the rear edge of the tailgate.

Preferably, the vehicle comprises a control unit configured to control the transition from the first to the second configuration of the central portion of the movable wing automatically depending on at least one vehicle operating parameter, for example, depending on the forward speed.

### Brief Description of the Drawings

For a better understanding of the present invention, several non-limiting embodiments are described below, with reference to the appended drawings, wherein:
- Figure 1 is a schematic view of an example of a road vehicle;
- Figures 2 to 4 are schematic views of examples of an innovative movable wing according to the present invention in different use configurations.

### Preferred embodiments of the invention

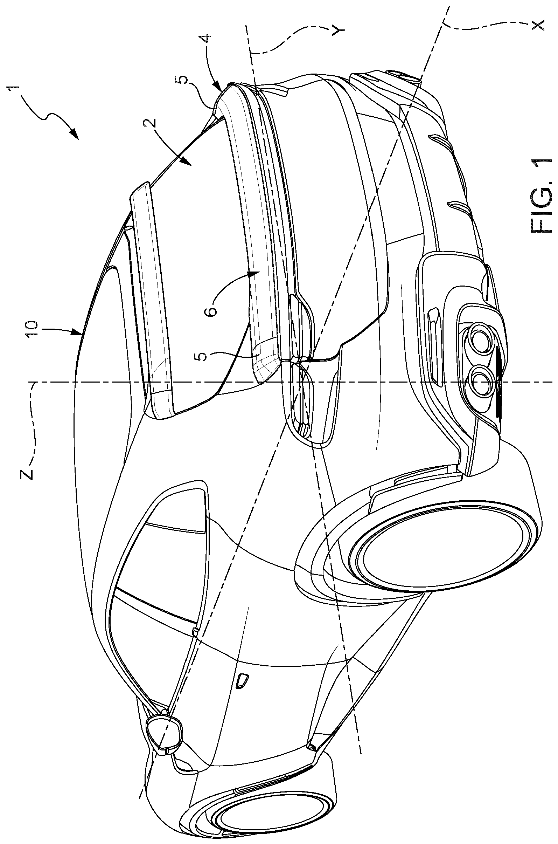

Figure 1 is a schematic view of an example of a road vehicle according to the present invention. Figure 1 shows a road vehicle 1 with the roll X, pitch Y and yaw Z axes. The reference number 10 identifies in general the bodywork of the vehicle 1, whereas the references 2 and 11 identify two parts of the bodywork, i.e. the roof 11 and the hatchback or tailgate 2. The other elements of the bodywork 2 and the vehicle 1 in general have not been numbered for clarity and since only the tailgate 2 contributes to clarifying the object and the solution of the present invention. As is visible, the vehicle 1 comprises a rear wing 4 attached to the tailgate 2 that extends substantially parallel to the pitch axis Y. The wing 4 is bridge-shaped and comprises two ends 5 attached to the lateral opposite edges of the tailgate 2 and a central portion 6 that runs parallel and spaced along the tailgate 2. The reference number 3 identifies the rear edge of the tailgate 2 along the roll axis X and, in Figure 1, identifies the rear end of the vehicle's rear overhang 1.

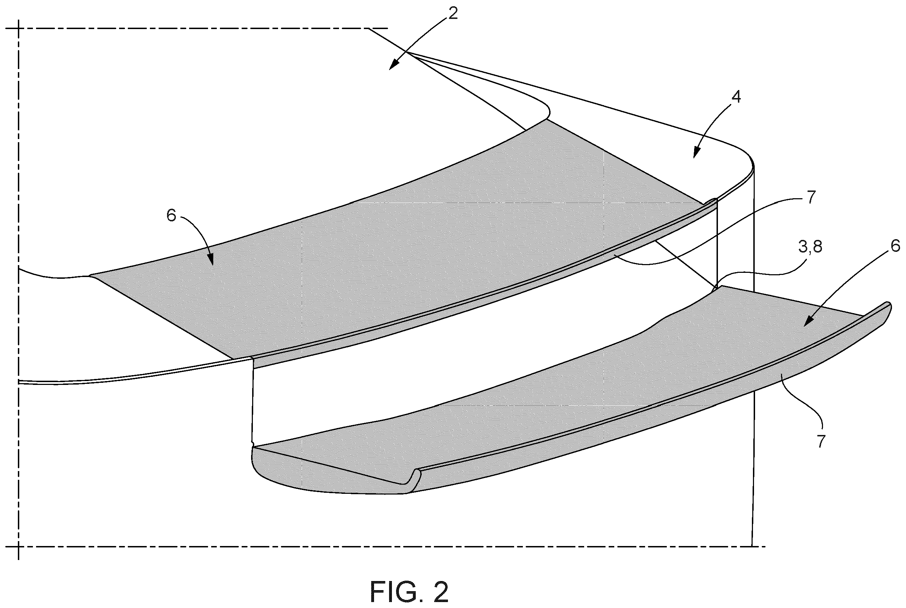

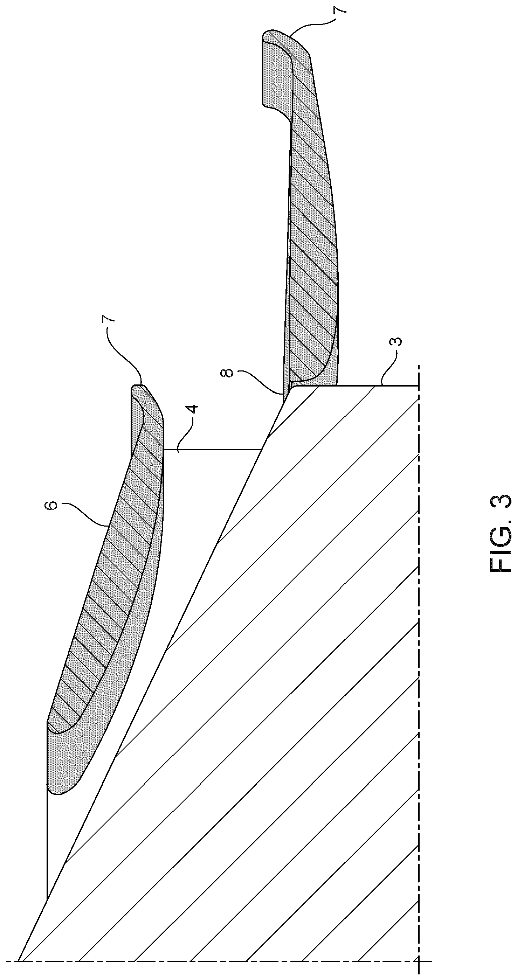

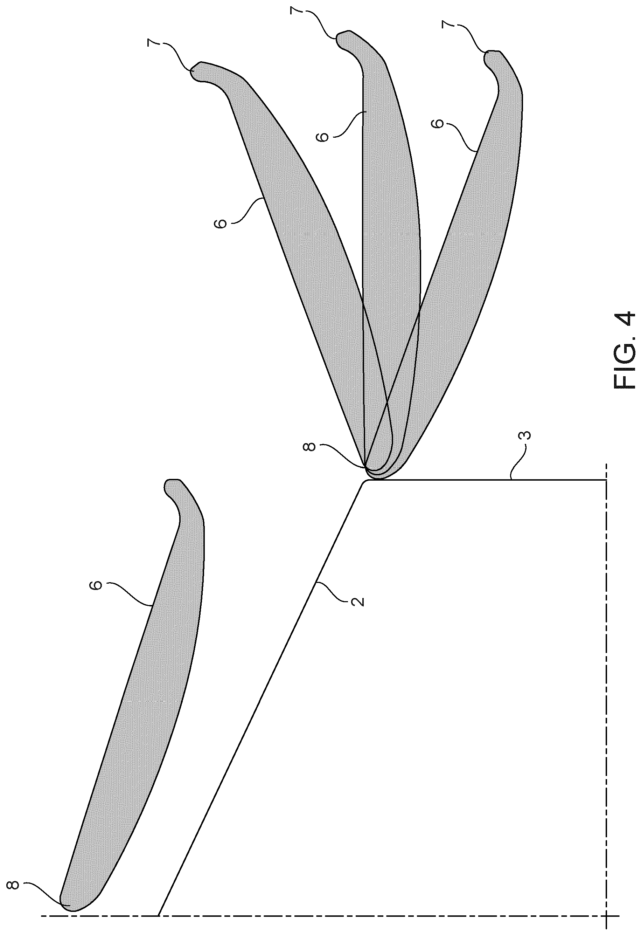

Figures 2 to 4 are schematic views of examples of an innovative movable wing according to the present invention in different use configurations. In particular, in these drawings it can be seen how the central portion 6 of the wing 4 is movable relative to the lateral portions 5 and to the tailgate 2 in order to pass from a first configuration, in which the central portion 6 makes with the rest of the rear wing a single seamless aerodynamic surface and in which the rear edge 3 of the tailgate 2 defines the rear end of the rear overhang of the vehicle 1, to a second configuration in which the movable portion 6 is in a rearward position along the roll axis X relative to the rest of the rear wing 2. In such second configuration shown in Figures 2 and 3, the central portion 6 of the wing 4 comprises a front edge 8 flush with the rear edge 3 of the tailgate 2 and a rear edge 7 that defines the rear end of the vehicle's rear overhang 1. The transition from the first to the second configuration occurs in the example of Figures 2 and 3 through translation and can be implemented automatically by a control unit in determined conditions, for example when the vehicle 1 exceeds a speed value. Lastly, the example of Figure 4 introduces a second movement of the central portion 6. In particular, when the wing 4 is in the second position, it is possible to provide for a rotation around an axis parallel to the pitch axis passing through the front edge 8 of the central portion 6.

In conclusion, it is clear that changes and variants may be made to the vehicle described and illustrated here without thus deviating from the scope of protection of the present invention, as defined in the appended claims.

## Claims

1. Road vehicle (1) having a roll axis (X), pitch axis (Y) and yaw axis (Z), wherein the road vehicle (1) comprises:
- a rear tailgate (2) with a rear edge (3);
- a rear wing (4) coupled to the rear tailgate (2) and extending substantially bridge-like along the pitch axis (Y) with two lateral portions (5) attached to the rear tailgate (2) and a central portion (6);
**characterised in that**:
the central portion (6) of the rear wing (4) is movable between:
- a first configuration wherein the central portion (6) makes with the rest of the rear wing a single seamless aerodynamic surface and wherein the rear edge (3) of the rear tailgate (2) defines the rear end of the vehicle's rear overhang (1);
- at least a second configuration wherein the central portion (6) is in a rearward position along the roll axis (X) relative to the rest of the rear wing (2) and comprises a rear edge (7) that projects posteriorly beyond the rear edge (3) of the tailgate (2) such that in the second configuration the rear end of the vehicle's rear overhang (1) is defined by the rear edge (7) of the centre portion (6) of the movable wing (2).

2. Road vehicle (1) as claimed in claim 1, wherein to move from the first to the second configuration and vice versa the central portion (6) of the rear wing (2) makes a translation or roto-translation movement.

3. Road vehicle (1) as claimed in any of the preceding claims, wherein the central portion (6) is configured to realize a plurality of second configurations wherein in each second configuration it realizes a different rear overhang of the vehicle (1).

4. Road vehicle (1) as claimed in any one of the preceding claims, wherein the central portion (6) comprises a front edge (8); wherein in a second configuration the front edge (8) is substantially aligned with the rear edge (3) of the tailgate (2) such that the entire central portion (6) projects posteriorly beyond the rear edge (3) of the tailgate (2).

5. Road vehicle (1) as claimed in any of the preceding claims, wherein in the second configuration the central portion (6) is rotatable about an axis (9) parallel to the pitch axis (Y).

6. Road vehicle (1) as claimed in claim 5, wherein the axis of rotation (9) is at the front edge (8) of the central portion (6).

7. Road vehicle (1) as claimed in any of the preceding claims, wherein the vehicle comprises a control unit configured to control the transition from the first to the second configuration of the central portion of the movable wing automatically depending on at least one vehicle operating parameter, for example, depending on the forward speed.
